# EUROPEAN PATENT SPECIFICATION

(11) **EP 3 498 774 B1**
(45) Date of publication and mention of the grant of the patent: **01.05.2024**
(21) Application number: 18771683.2
(22) Date of filing: 14.03.2018
(51) Int. Cl.: C08L 27/06, C08L 33/12, C08K 3/013, C08K 5/101, C08K 5/11, C08K 5/12, C08K 5/5333

(54) **RESIN COMPOSITION OBTAINED BY MIXING POLYVINYL CHLORIDE RESIN AND ACRYLIC RESIN, AND INDOOR INTERIOR MATERIAL BOARD PRODUCED USING SAME**
DURCH MISCHEN VON POLYVINYLCHLORIDHARZ UND ACRYLHARZ GEWONNENE HARZZUSAMMENSETZUNG UND DAMIT HERGESTELLTE MATERIALPLATTE FÜR INNENRAUMEINRICHTUNG
COMPOSITION DE RÉSINE OBTENUE PAR MÉLANGE D'UNE RÉSINE DE POLYCHLORURE DE VINYLE ET D'UNE RÉSINE ACRYLIQUE, ET PLAQUE D'INTÉRIEUR EN MATÉRIAU PRODUITE À L'AIDE DE CELLE-CI

(30) Priority: 22.03.2017 KR 20170035828; 13.03.2018 KR 20180029397
(43) Date of publication of application: 19.06.2019
(73) Proprietor: LG Hausys, Ltd., Seoul 07326 (KR)
(72) Inventor: KO, HaeSeung, Seoul 07796 (KR); NAM, Seung Baik, Seoul 07796 (KR); PARK, Myeong Seok, Seoul 07796 (KR); JANG, Woo Kyung, Seoul 07796 (KR); JUNG, Woo Chul, Seoul 07796 (KR)
(74) Representative: Goddar, Heinz J.
(86) International application number: PCT/KR2018/002981
(87) International publication number: WO 2018/174460

(56) References cited:
- WO-A1-2013/097890
- CN-A- 103 541 539
- KR-A- 20160 093 192
- KR-A- 20160 093 193
- KR-B1- 100 598 213
- US-A1- 2003 003 317
- DATABASE WPI Week 201418 Thomson Scientific, London, GB; AN 2013-S02122 XP002798066, -& CN 103 146 094 A (CHUZHOU GEMEITE TECHNOLOGY CO LTD) 12 June 2013 (2013-06-12)

## Description

### [Technical Field]

The present invention relates to a board for interior materials comprising a resin composition containing a polyvinyl chloride resin and an acrylic resin. More specifically, the present invention relates to a board for interior materials comprising a resin composition having excellent heat resistance due to a high glass transition temperature, having high flexibility even with a low plasticizer content, and having excellent processability due to such properties, as compared with the case wherein a polyvinyl chloride resin is used alone,. As an advantage of the resin composition having excellent processability, both a calendering method and an extrusion method may be used to perform a manufacturing process using the resin composition.

### [Background Art]

Polyvinyl chloride resins are a typical general-purpose polymer widely used for flooring materials, wallpaper, pipes, window profiles, flexible films for food packaging, fiber, and the like. However, since polyvinyl chloride resins have low glass transition temperature (Tg) and low heat distortion temperature (HDT), application thereof is limited at high temperatures. For example, commercially available conventional polyvinyl chloride resins have a glass transition temperature of about 80 °C.

In addition, since the formulation of a composition containing a conventional polyvinyl chloride resin is not designed so that the composition has a higher glass transition temperature than the polyvinyl chloride resin, there have been limitations in improving the physical properties of products manufactured using the composition.

In addition, when a composition containing a conventional polyvinyl chloride resin is processed, generally, a plasticizer is added to impart flexibility by lowering a glass transition temperature, or the composition is processed to have a profile or pipe form without addition of a plasticizer.

In the case of a polyvinyl chloride resin composition containing a plasticizer, since the plasticizer-containing composition has excellent processability due to flexibility thereof, a calendering method with high productivity may be used to process the composition. On the other hand, in the case of a polyvinyl chloride resin composition not containing a plasticizer, since the plasticizer-free composition lacks flexibility and is hard, an extrusion method is generally used. However, the extrusion method is significantly less productive than the calendering method.

Therefore, a manufacturing method is determined depending on the presence or absence of a plasticizer, and the physical properties and productivity of a product vary greatly depending on the manufacturing method.

As an example of increasing the heat resistance of polyvinyl chloride resins, a polyether ketone compatible with polyvinyl chloride resins and having a hyperbranched structure capable of melt blending and a heat-resistant polyvinyl chloride blend including the polyether ketone are disclosed in KR 10-2001-0056683 A.

However, the heat-resistant polyvinyl chloride blend of the prior art is mainly used to manufacture pipes for hot water piping, and use thereof is very limited.

In addition, hard board materials used to manufacture interior materials such as flooring materials and closet materials include plywood, high-density fiberboard (HDF), medium-density fiberboard (MDF), inorganic boards, fiber boards, and the like. The above-described boards have respective drawbacks. Wood-based boards such as plywood, HDF, and MDF are poor in water resistance, and inorganic boards need to be lightweight due to high specific gravity thereof. In fiber boards, dimension reinforcing fiber and a polymer binder are contained in a certain mixing ratio. In this case, due to the burrs of the reinforcing fiber, it is difficult to form grooves for fastening a board processed to have a predetermined size.

When a hard board for flooring materials and closet materials is manufactured using a polyvinyl chloride resin, due to the low glass transition temperature of the polyvinyl chloride resin, the hard board is vulnerable to heat distortion during long-term use.

Therefore, a polyvinyl chloride resin composition applicable to manufacture of boards for interior materials such as flooring materials and closet materials, having excellent heat resistance and high flexibility, having excellent processability due to such properties, and applicable to both a calendering method and an extrusion method due to excellent processability thereof needs to be developed.

### [Prior Art Document]

[Patent Document] (Patent Document 1) KR 10-2001-0056683 A (July 04, 2001)

CN 103146094 A discloses a modified plastic used as floor material which comprises 100 parts by weight of waste polyvinylchloride plastics, 25-40 parts polyvinylchloride resin powder, 8-12 parts plasticizer, 4.2-5.5 parts composite stabilizer, 100-180 parts filler, 10-30 parts impact modifier, 3.5-5 parts foaming agent, 0.6-1 parts additive and 6-20 parts wear-resisting agent. The impact modifier may be chosen from polyvinylchloride, methylmethacrylate copolymers, butadiene rubber and ethylene propylene diene monomer rubber.

KR 20160093192 A discloses a transparent film composition for a floor material, comprising 0.1 to 50 parts by weight of an acrylic resin and 20 parts by weight or less of a plasticizer with respect to 100 parts by weight of a polyvinylchloride resin.

KR 100598213 B1 discloses a resin-based floor material, wherein 100 to 700 parts by weight of an inorganic filling material is mixed with an ethylene vinyl acetate copolymer and a polyolefine-based resin.

CN 103541539 A discloses a resin-based floor material, wherein for its preparation an acryl-based resin is added to a polyvinylchloride resin so as to improve thermal deformation temperature.

### [Disclosure]

### [Technical Problem]

Therefore, the present invention has been made in view of the above problems, and it is one object of the present invention to provide a board for interior materials comrising a resin composition having excellent heat resistance, high flexibility even with a low plasticizer content, excellent processability due to such properties, and applicable to both a calendering method and an extrusion method due to excellent processability thereof.

### [Technical Solution]

In accordance with one aspect of the present invention, provided is a board for interior materials, comprising:
a resin composition comprising 20 to 60 parts by weight of an acrylic resin, 1 to 15 parts by weight of a plasticizer, and 200 to 450 parts by weight of calcium carbonate, based on 100 parts by weight of a polyvinyl chloride resin, and
wherein poly(methyl methacrylate) is used as the acrylic resin,
wherein the poly(methyl methacrylate) is a copolymer of methyl methacrylate and methyl acrylate or a copolymer of methyl methacrylate, methyl acrylate, and methacrylic acid,
wherein the poly(methyl methacrylate) has a weight average molecular weight (Mw) of 10,000 to 300,000 g/mol, and
wherein the resin composition further comprises 2 to 6 parts by weight of a heat stabilizer based on 100 parts by weight of the polyvinyl chloride resin.

Further embodiments are disclosed in the dependent claims.

### [Advantageous effects]

As apparent from the foregoing, the present invention advantageously provides a board for interior materials comprising a resin composition containing a polyvinyl chloride resin and an acrylic resin. Since the resin composition contains a certain amount of the acrylic resin, the resin composition has excellent compatibility with the polyvinyl chloride resin, has high flexibility even with a low plasticizer content, and has excellent processability due to such properties. Therefore, both a calendering method and an extrusion method can be used to perform a manufacturing process using the resin composition.

In addition, the resin composition and a board for interior materials manufactured using the same have excellent heat resistance due to high glass transition temperatures thereof, as compared with a conventional polyvinyl chloride resin composition and a board manufactured using only the polyvinyl chloride resin as a resin component.

### [Best mode]

Hereinafter, the present invention will be described in detail.

The present invention relates to a board for interior materials, comprising:
a resin composition comprising 20 to 60 parts by weight of an acrylic resin, 1 to 15 parts by weight of a plasticizer, and 200 to 450 parts by weight of calcium carbonate, based on 100 parts by weight of a polyvinyl chloride resin, and
wherein poly(methyl methacrylate) is used as the acrylic resin,
wherein the poly(methyl methacrylate) is a copolymer of methyl methacrylate and methyl acrylate or a copolymer of methyl methacrylate, methyl acrylate, and methacrylic acid,
wherein the poly(methyl methacrylate) has a weight average molecular weight (Mw) of 10,000 to 300,000 g/mol, and
wherein the resin composition further comprises 2 to 6 parts by weight of a heat stabilizer based on 100 parts by weight of the polyvinyl chloride resin.

For example, the polyvinyl chloride resin may have a weight average molecular weight (Mw) of 50,000 to 150,000 g/mol or 70,000 to 130,000 g/mol. When the weight average molecular weight is less than the above range, the mechanical properties of a final product may be deteriorated. When the weight average molecular weight exceeds the above range, processability may be lowered. Thus, the polyvinyl chloride resin satisfying the above range may be used.

The acrylic resin may be added to prepare a resin composition having a high glass transition temperature, having high flexibility even with a low plasticizer content, and having excellent processability due to such properties. Poly(methyl methacrylate), which has a relatively high glass transition temperature and excellent impact resistance, is used as the acrylic resin.

The poly(methyl methacrylate) is a copolymer of methyl methacrylate and methyl acrylate or a copolymer of methyl methacrylate, methyl acrylate, and methacrylic acid.

For example, the poly(methyl methacrylate) may have a glass transition temperature of 80 to 130 °C or 90 to 110 °C. When the glass transition temperature is less than the above range, the degree of increase in the glass transition temperature of the resin composition may be insignificant. When the glass transition temperature exceeds the above range, the processability of the resin composition may be lowered. Thus, the poly(methyl methacrylate) satisfying the above range may be used.

The poly(methyl methacrylate) has a weight average molecular weight (Mw) of 10,000 to 300,000 g/mol, 15,000 to 150,000 g/mol, or 20,000 to 130,000 g/mol. When the weight average molecular weight is less than the above range, polymerization reaction may not be performed properly. When the weight average molecular weight exceeds the above range, compatibility with the polyvinyl chloride resin may be degraded and processability may be lowered. Thus, the poly(methyl methacrylate) satisfying the above range may be used.

The acrylic resin is contained in an amount of 20 to 60 parts by weight based on 100 parts by weight of a polyvinyl chloride resin. When the amount is less than the above range, the degree of increase in the glass transition temperature of the resin composition may be insignificant. When the amount exceeds the above range, since an excess of the acrylic resin, which is about 2.5 times more expensive than the polyvinyl chloride resin, is contained, raw material costs are increased, and efficiency is decreased. Thus, the acrylic resin satisfying the above range may be used.

In addition, the resin composition has excellent compatibility with the polyvinyl chloride resin and contains an acrylic resin having excellent processability, the content of a plasticizer may be minimized as compared with a conventional resin composition containing polyvinyl chloride alone.

The plasticizer may be a phthalate plasticizer, a terephthalate plasticizer, a benzoate plasticizer, a citrate plasticizer, a phosphate plasticizer, an adipate plasticizer, or a mixture thereof.

As the phthalate plasticizer, dioctyl phthalate, diethylhexyl phthalate, diisononyl phthalate, diisodecyl phthalate, dimethyl phthalate, diethyl phthalate, dibutyl phthalate, diheptyl phthalate, dinonyl phthalate, or ditridecyl phthalate may be used, without being limited thereto.

As the terephthalate plasticizer, dioctyl terephthalate may be used, without being limited thereto.

As the benzoate plasticizer, 2-(2-(2-phenylcarbonyloxyethoxy)ethoxy)ethyl benzoate, glyceryl tribenzoate, trimethylolpropane tribenzoate, isononyl benzoate, 1-methyl-2-(2-phenylcarbonyloxypropoxy)ethyl benzoate, 2,2,4-trimethyl-1,3-pentanediol dibenzoate, n-hexyl benzoate, or trimethylolpropane tribenzoate may be used, without being limited thereto.

As the citrate plasticizer, acetyl tributyl citrate or tributyl citrate may be used, without being limited thereto.

As the phosphate plasticizer, tricresyl phosphate or tributyl phosphate may be used, without being limited thereto.

As the adipate plasticizer, bis(2-ethylhexyl)adipate, dimethyl adipate, monomethyl adipate, dioctyl adipate, or diisononyl adipate may be used, without being limited thereto.

The plasticizer is contained in an amount of 1 to 15 parts by weight or 1 to 10 parts by weight based on 100 parts by weight of a polyvinyl chloride resin. When the amount is less than the above range, the processability and physical properties of the resin composition may be deteriorated. When the amount exceeds the above range, the mechanical properties of a final product may be deteriorated. Thus, the plasticizer satisfying the above range may be used.

As the inorganic filler, calcium carbonateis used.

The inorganic filler is contained in an amount of 200 to 450 parts by weight based on 100 parts by weight of a polyvinyl chloride resin. When the amount is less than the above range, physical properties may be deteriorated and costs may be increased. When the amount exceeds the above range, processability may be deteriorated. Thus, the inorganic filler satisfying the above range may be used.

The resin composition further includes a heat stabilizer.

The heat stabilizer is a component necessary for processing conventional polyvinyl chloride resins, and as the heat stabilizer, epoxidized soybean oil, a metal salt, a calcium/zinc-based heat stabilizer, a barium/zinc-based heat stabilizer, or a mixture thereof may be used, without being limited thereto. In addition, the heat stabilizer is contained in an amount of 2 to 6 parts by weight based on 100 parts by weight of a polyvinyl chloride resin.

In addition, the resin composition may further include, when necessary, other additives for controlling the physical properties of a product manufactured using the resin composition. As the additives, one or more selected from the group consisting of melt strength reinforcing agents, lubricants, antistatic agents, ultraviolet absorbers, flame retardants, antioxidants, coloring agents, stabilizers, wetting agents, thickeners, foaming agents, defoaming agents, coagulants, gelling agents, sedimentation inhibitors, and anti-aging agents may be used, without being limited thereto. In addition, the contents of the additives are not particularly limited.

The resin composition has a glass transition temperature of 70 to 95 °C, 75 to 90 °C, or 77 to 88 °C. Since the resin composition has a higher glass transition temperature than conventional polyvinyl chloride resin compositions, the resin composition has excellent heat resistance.

Since the resin composition contains a certain amount of an acrylic resin, the resin composition has excellent compatibility with a polyvinyl chloride resin, has high flexibility even with a low plasticizer content, and has excellent processability due to such properties. Therefore, the resin composition is applicable to both a calendering method and an extrusion method due to excellent processability thereof.

The board for interior materials may be manufactured by subjecting the resin composition to calendering molding or extrusion molding.

The calendering molding may be performed by passing the resin composition through a calender roll at 160 to 170 °C.

In the extrusion molding, the resin composition is put into an extruder and melt-kneaded at a temperature of 180 to 200 °C. Then, under the condition wherein temperature is gradually lowered toward a die (i.e., from 180 °C to 150 °C), the resin composition is molded using pressure drop while being extruded.

The board for interior materials may have a heat distortion temperature of 65 to 95 °C, 70 to 90 °C, or 75 to 85 °C. Within this range, the board for interior materials of the present invention may have excellent heat resistance.

In addition, the board for interior materials may have a thickness of 1 to 10 mm or 1.5 to 7 mm, without being limited thereto. In addition, the thickness of the board may be changed as required.

When the board for interior materials of the present invention is used as a flooring material or a closet material, an interior finishing material such as wallpaper, paint, or a decorative film may be additionally attached to or painted on the surface of the board after the board is installed on walls or floors.

Alternatively, the board for interior materials of the present invention may be manufactured to have an integral structure in which an interior finishing material such as wallpaper, paint, or a decorative film is attached to or painted on one side or both sides of the board. The board having the integral structure may be installed on walls or floors.

The board for interior materials manufactured using the resin composition has a higher heat distortion temperature than a board manufactured using only a polyvinyl chloride resin as a resin component. Thus, the board according to the present invention has excellent heat resistance.

Hereinafter, the present invention will be described in more detail with reference to the following preferred examples.

### [Experimental Examples]

### 1. Preparation of resin composition and measurement of glass transition temperature

The resin compositions of Examples 1 and 2, Comparative Examples 1 to 5, and Reference Example 1 were prepared according to the mixing ratios shown in Table 1 below, and the glass transition temperatures thereof were measured.
- Glass transition temperatures were measured using a differential scanning calorimeter (DSC).
- A polyvinyl chloride (PVC) resin (LS100, LG Chem, Ltd.) having a weight average molecular weight of 100,000 g/mol and a glass transition temperature of 80 °C was used.
- As a plasticizer, dioctyl terephthalate (DOTP, LG Chem, Ltd.) was used.
- In PMMA 1, an acrylic resin having a weight average molecular weight of 43,000 g/mol and a glass transition temperature of 105 °C was used.
- In PMMA 2, an acrylic resin having a weight average molecular weight of 91,000 g/mol and a glass transition temperature of 92 °C was used.
- In PMMA 3, an acrylic resin having a weight average molecular weight of 400,000 g/mol and a glass transition temperature of 108 °C was used.
- As an inorganic filler, calcium carbonate (CaCO₃) was used.
- As a heat stabilizer, a Ba/Zn-based stabilizer was used.

**[Table 1]**

| | Exa mpl e 1 | Exa mpl e 2 | Compa rativ e Examp le 1 | Compa rativ e Examp le 2 | Compa rativ e Examp le 3 | Compa rativ e Examp le 4 | Compa rativ e Examp le 5 | Refe renc e Exam ple 1 | |
|---|---|---|---|---|---|---|---|---|---|
| Con ten t (pa rts by wei ght ) | PVC | 100 | 100 | 100 | 100 | 100 | 100 | 100 | 100 |
| | DOTP | 7 | 7 | 25 | 7 | 7 | 20 | 20 | 7 |
| | PMMA | 50 | - | - | 80 | 3 | 50 | 80 | - |
| | 1 (Mw: 43,00 0 g/mol ) | | | | | | | | |
| | PMMA 2 (Mw: 91,00 0 g/mol ) | - | 50 | - | - | - | - | - | - |
| | PMMA 3 (Mw: 400,0 00 g/mol ) | - | - | - | - | - | - | - | 50 |
| | Inorg anic fille r | 300 | 300 | 300 | 300 | 300 | 300 | 300 | 300 |
| | Heat stabi lizer | 3 | 3 | 3 | 3 | 3 | 3 | 3 | 3 |
| Glass transition temperatur e (°C) | | 81 | 81 | 30 | 90 | 68 | 55 | 64 | 81 |

### 2. Evaluation of physical properties of board for interior materials manufactured using resin composition

Each of the resin compositions prepared in the above experiments was passed through a calender roll at 160 to 170 °C to manufacture a board for interior materials having a length, a width, and a thickness of 300 mm × 200 mm × 4 mm.

### - Heat distortion temperature (Heat resistance)

The heat distortion temperatures of the boards for interior materials were measured according to Standard ISO 75-1, and the results are shown in Table 2 below.

Specifically, each board was cut to prepare a specimen having a length, a width, and a thickness of 80 mm × 10 mm × 4 mm, and the prepared specimen was placed on a support in an oil-containing heat bath so that the specimen was immersed in the oil to a depth of at least 50 mm. Thereafter, a load of 80 g was applied to the specimen, and the distortion value of the specimen after 5 minutes was set to zero. Then, when the temperature of the heat bath was raised at a constant rate of 120±10 °C/h, the specimen sagged under the load. At this time, temperature at which the specimen was distorted by 0.3 mm was measured.

### Processability

Processability was measured when the boards for interior materials were manufactured by a calendering method, and the results are shown in Table 2 below.

Specifically, each board was molded in a calender roll, and then processability was evaluated by visually checking the surface of the molded board.
(Good: surface of molded board is smooth)
(Bad: surface of molded board is not smooth and is rough)

**[Table 2]**

| | | Exa mpl e 1 | Exa mpl e 2 | Compa rativ e Examp le 1 | Compa rativ e Examp le 2 | Compa rativ e Examp le 3 | Compa rativ e Examp le 4 | Compa rativ e Examp le 5 | Refe renc e Exam ple 1 |
|---|---|---|---|---|---|---|---|---|---|
| Con ten t (pa rts by wei ght ) | PVC | 100 | 100 | 100 | 100 | 100 | 100 | 100 | 100 |
| | DOTP | 7 | 7 | 25 | 7 | 7 | 20 | 20 | 7 |
| | PMMA 1 (Mw: 43,00 0 g/mol ) | 50 | - | - | 80 | 3 | 50 | 80 | - |
| | PMMA 2 (Mw: 91,00 0 g/mol ) | - | 50 | - | - | - | - | - | - |
| | PMMA 3 (Mw: 400, 0 00 g/mol ) | - | - | - | - | - | - | - | 50 |
| | Inorg anic fille r | 300 | 300 | 300 | 300 | 300 | 300 | 300 | 300 |
| | Heat stabi lizer | 3 | 3 | 3 | 3 | 3 | 3 | 3 | 3 |
| Heat distortion temperatur e (°C) | | 77 | 78 | 26 | 86 | 64 | 51 | 60 | 76 |
| Processabi lity | | Goo d | Goo d | Good | Good | Bad | Good | Good | Bad |

As shown in Table 1, it can be confirmed that the glass transition temperatures of the resin compositions of Examples 1 and 2, in which an acrylic resin is mixed in a certain ratio, are significantly higher than that of the resin composition of Comparative Example 1, in which a polyvinyl chloride resin alone is contained.

In addition, as shown in Table 2, it can be confirmed that the heat distortion temperatures of the boards of Examples 1 and 2 are significantly higher than that of the board of Comparative Example 1 not containing an acrylic resin. These results indicate that the boards of Examples 1 and 2 have excellent heat resistance.

In addition, compared with Comparative Example 1, since each of the compositions of Examples 1 and 2 contains a certain amount of an acrylic resin, the compositions according to Examples 1 and 2 have excellent compatibility with a polyvinyl chloride resin and have excellent processability even when the plasticizer content is less than 1/3 of that in Comparative Example 1. Due to these properties, calendering molding may be applied to the manufacture of boards using the compositions of Examples 1 and 2.

In addition, in the case of Comparative Example 2, since an excess of an acrylic resin is present, raw material cost may be increased. Accordingly, Comparative Example 2 is not preferable. In the case of Comparative Example 3, since the amount of the acrylic resin contained is less than the specific content, rise of the glass transition temperature is insignificant, and the heat distortion temperature of the board of Comparative Example 3 is lower than those of the boards of Examples 1 and 2. In addition, processability is also deteriorated.

In addition, it can be confirmed that the glass transition temperature and the heat distortion temperature of Comparative Example 4, in which an excess of a plasticizer is present, are much lower than those of Examples 1 and 2.

In addition, it can be confirmed that, in the case of Comparative Example 5, in which an excess of an acrylic resin and an excess of a plasticizer are present, processability is excellent, but the glass transition temperature and the heat distortion temperature are much lower than those of Examples 1 and 2.

In addition, it can be confirmed that, in the case of Reference Example 1, in which an acrylic resin having a weight average molecular weight of more than 300,000 g/mol is used, processability is deteriorated.

## Claims

1. A board for interior materials, comprising:
a resin composition comprising 20 to 60 parts by weight of an acrylic resin, 1 to 15 parts by weight of a plasticizer, and 200 to 450 parts by weight of calcium carbonate, based on 100 parts by weight of a polyvinyl chloride resin, and
wherein poly(methyl methacrylate) is used as the acrylic resin,
wherein the poly(methyl methacrylate) is a copolymer of methyl methacrylate and methyl acrylate or a copolymer of methyl methacrylate, methyl acrylate, and methacrylic acid,
wherein the poly(methyl methacrylate) has a weight average molecular weight (Mw) of 10,000 to 300,000 g/mol, and
wherein the resin composition further comprises 2 to 6 parts by weight of a heat stabilizer based on 100 parts by weight of the polyvinyl chloride resin.

2. The board according to claim 1, wherein the plasticizer is a phthalate plasticizer, a terephthalate plasticizer, a benzoate plasticizer, a citrate plasticizer, a phosphate plasticizer, an adipate plasticizer, or a mixture thereof.

3. The board according to claim 1, wherein the resin composition has a glass transition temperature of 75 to 90 °C.

4. The board according to claim 1, wherein the resin composition has a glass transition temperature of 77 to 88 °C.

## Patentansprüche

1. Platte für Innenmaterialien, umfassend:
eine Harzzusammensetzung, umfassend 20 bis 60 Gewichtsteile eines Acrylharzes, 1 bis 15 Gewichtsteile eines Weichmachers und 200 bis 450 Gewichtsteile Calciumcarbonat, bezogen auf 100 Gewichtsteile eines Polyvinylchloridharzes, und
wobei Poly(methylmethacrylat) als das Acrylharz verwendet wird,
wobei das Poly(methylmethacrylat) ein Copolymer von Methylmethacrylat und Methylacrylat oder ein Copolymer von Methylmethacrylat, Methylacrylat und Methacrylsäure ist,
wobei das Poly(methylmethacrylat) ein gewichtsmittleres Molekulargewicht (Mw) von 10.000 bis 300.000 g/mol aufweist, und
wobei die Harzzusammensetzung ferner 2 bis 6 Gewichtsteile eines Wärmestabilisators, bezogen auf 100 Gewichtsteile des Polyvinylchloridharzes, umfasst.

2. Platte nach Anspruch 1, wobei der Weichmacher ein Phthalatweichmacher, ein Terephthalatweichmacher, ein Benzoatweichmacher, ein Citratweichmacher, ein Phosphatweichmacher, ein Adipatweichmacher oder eine Mischung davon ist.

3. Platte nach Anspruch 1, wobei die Harzzusammensetzung eine Glasübergangstemperatur von 75 bis 90 °C aufweist.

4. Platte nach Anspruch 1, wobei die Harzzusammensetzung eine Glasübergangstemperatur von 77 bis 88 °C aufweist.

## Revendications

1. Panneau pour matériaux intérieurs, comprenant :
une composition de résine comprenant 20 à 60 parties en poids d'une résine acrylique, 1 à 15 parties en poids d'un plastifiant et 200 à 450 parties en poids de carbonate de calcium, sur la base de 100 parties en poids d'une résine de chlorure de polyvinyle, et
dans lequel un poly(méthyl méthacrylate) est utilisé comme résine acrylique,
dans lequel le poly(méthyl méthacrylate) est un copolymère de méthacrylate de méthyle et d'acrylate de méthyle ou un copolymère de méthacrylate de méthyle, d'acrylate de méthyle et d'acide méthacrylique,
dans lequel le poly(méthyl méthacrylate) a un poids moléculaire moyen en poids (Mw) de 10 000 à 300 000 g/mol, et
dans lequel la composition de résine comprend en outre 2 à 6 parties en poids d'un stabilisant thermique sur la base de 100 parties en poids de la résine de chlorure de polyvinyle.

2. Panneau selon la revendication 1, dans lequel le plastifiant est un plastifiant de phtalate, un plastifiant de téréphtalate, un plastifiant de benzoate, un plastifiant de citrate, un plastifiant de phosphate, un plastifiant d'adipate, ou un mélange de ces derniers.

3. Panneau selon la revendication 1, dans lequel la composition de résine a une température de transition vitreuse de 75 à 90 °C.

4. Panneau selon la revendication 1, dans lequel la composition de résine a une température de transition vitreuse de 77 à 88 °C.
